# EUROPEAN PATENT SPECIFICATION

(11) **EP 1 121 854 B1**
(45) Date of publication and mention of the grant of the patent: **27.04.2005**
(21) Application number: 01200362.0
(22) Date of filing: 01.02.2001
(51) Int. Cl.: A01K 13/00

(54) **Rug for animals, particularly horses**
Decke für Tiere, insbesondere für Pferde
Couverture pour animaux, en particulier pour chevaux

(30) Priority: 04.02.2000 SE 0000371
(43) Date of publication of application: 08.08.2001
(73) Proprietor: Hööks Hästsport AB, 501 77 Boras (SE)
(72) Inventor: Höök, Bengt, 503 36 Boras (SE)
(74) Representative: Hammond, Andrew David

(56) References cited:
- AU-B- 553 401
- US-A- 2 222 705
- US-A- 4 114 352
- US-A- 5 608 913
- Extract from Robinson & Co Saddlery catalogue dated 1997/1998 page 30
- Extract from Derby House Saddlery catalogue dated 1998/1999 page 58

## Description

### Field of the invention

The present invention relates to a animal rug, in particular a rug for horses, the rug being provided with a gusset, having an elastic means between the edges, allowing said gusset to be closed but at the same time allowing the horse to move without having said rug rubbing on the shoulders of the animal.

### Background of the invention

Horses, in particular horses being used as riding horses, are often in the need of be provided with a horse rug to protect them from coldness. Horses being outdoors in enclosed fields may also need to be protected against coldness, wind, rain or snow. The rug also functions to protect them from dirt, dust or clay. Since free waking horses moves all the time, run around, scamper about, roll or graze, this put strong requirements that said rug fits the horse well. A rug often glides backwards, since it follows the direction of the hairs. As the rug has glided backwards, it often rubs the shoulder of the horse, leading to loss of hair and in worst cases open wounds.

Earlier one has tried to solve this problem in different ways. One alternative is to provide the horse with an "under garment" being applied over the neck and being in close contact to the chest and the shoulder up to the withers and is attached behind the front legs. This under garment is made of a material, protecting it from rubbing against the shoulder. However, it is awkward to have two rugs on the horse. In addition the design of the under garment makes it too tight against the skin, since horses often is covered with a rug day and night, especially during the cold season.

One solution to the problem is having a separate front portion, being arranged over the chest and the shoulder and which is applied with buckles and elastic bands in order to permit freedom over the shoulder portion. However, this solution gives an extra part to the rug arrangement and complicates the handling of the rug.

US 2,222,705 show a rug for a dog, which rug is provided with an essentially cylindrical, stretchable intermediate portion which connects the front portion of the rug with the rear portion. The stretchable connecting portion 7 of this document makes the rug fit dogs of different sizes.

AU-B-553401 show a horse rug being provided with an shoulder opening wherein said shoulder opening is partly covered by means of a loose flap. This shoulder opening only provide a certain flexibility of the rug when the horse is moving. One major disadvantage is that the shoulder opening is almost wide open for wind and rain to reach the horse inside the rug. An other solution of the problem is to sew an extra pleat, a so-called shoulder gusset, which preferably extends vertically from the upper edge of the rug at the neck of the horse and over the shoulder. This functions as a bellows, which follows the movements of the horse and do not make the rug to press on the shoulder of the horse. However, this design has the disadvantage that the lower buckle attaching the rug at the front portion of the horse loses its function since the shoulder gusset provides that the rug lies properly applied over the shoulder. This leads to that the total strain is put on the upper buckle, which gets uncomfortable for the horse. In particular when the horse bends down the neck in order to eat.

### Summary of the invention

The object with the present invention is to provide a rug, where injuries on the shoulder portion of the animal is avoided and where the strain on the shoulder portion is distributed equally.

The above mentioned object is reached by a rug according to the characterising portion of claim 1.

In providing the rug with a gusset, possibly forming a pleat, containing an elastic means, the closure of said gusset is achieved when there is not any strain put on said gusset and allowing it to be opened when the horse moves, making said rug not rubbing against the shoulders of the animal.

### Description of drawings

The present invention will now be described by means of the following drawings, where:
- Fig. 1: shows a rug for horses, according to one embodiment of the invention, having a shoulder gusset being contracted.
- Fig. 2: shows the shoulder gusset of the present invention in an elongated state.
- Fig. 3: shows a cross section along the line III-III of the elongated shoulder gusset in Fig. 2.

### Detailed description of the invention

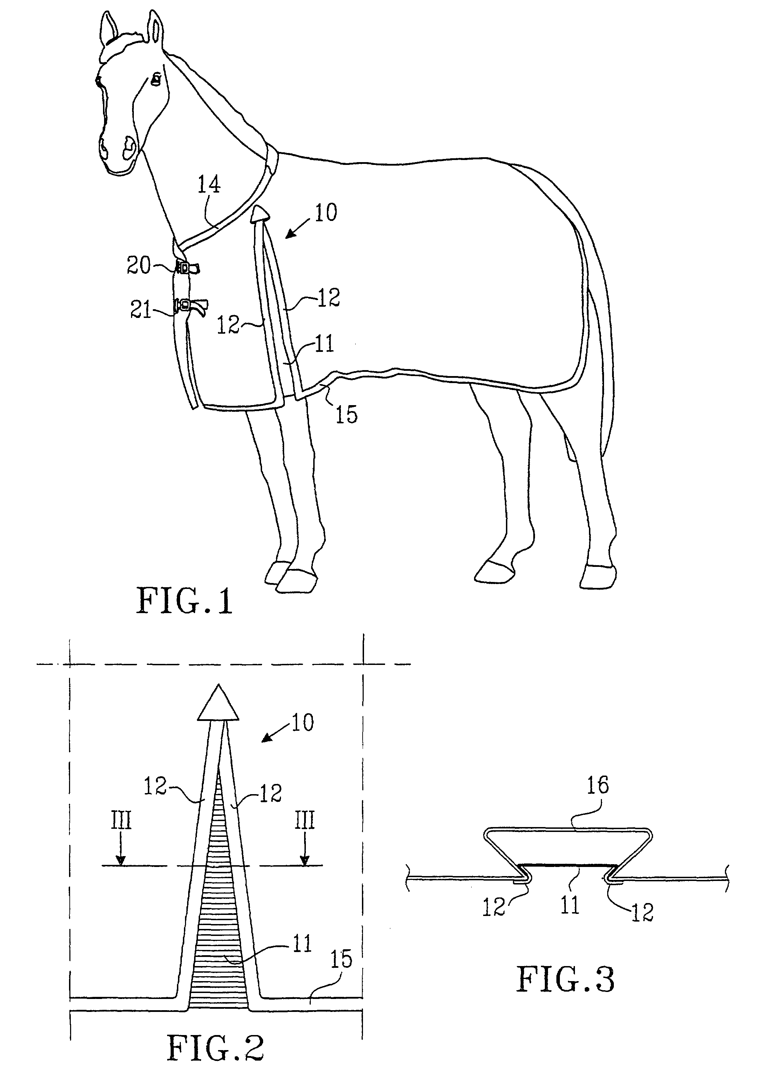

Figure 1 shows a rug intended for an animal, (provided with fastening bands, not shown), in particular a rug for horses. This rug is provided with a gusset, in the shape of a pleat 10, being arranged at the shoulder portion on both sides of the rug. The rug has two sides being essentially alike, for the sake of simplicity only the first one is described, whilst of course the invention relates to both sides. In the preferred embodiment the pleat 10 extends essentially vertical from the area about the edge 14, extending along the lower part of the horse's neck, that is about from the upper portion of the shoulder blade on the horse to the lower edge 15 on the rug. The pleat is shown in contracted state

Fig. 2 shows the pleat according to the present invention in elongated state. The pleat 10 is provided with an elastic element 11 being arranged between the edges 12, extending essentially in the same direction on the pleat 10. This elastic element 11 provides for the closure of said pleat, when no strain is put on the pleat and allows that it can be opened when the pleat 10 is loaded.

Fig. 3 shows a cross section along the line III - III in Fig. 2. The pleat 10 is designed as a bellows, i.e. it has material 16 (the same as for the rest of the rug), which is situated on the inside portions of the pleat. The material 16 decides how much the pleat can be opened when subjected to load.

Since the pleat 10 is being closed by an elastic element 11, the distribution of the force is going to take place on the buckles 20 and 21 on the rug. This provides for that the rug fits well on the horse and makes it easier for the horse to bend down the head.

The elastic means 11 can be a piece of elastic, etc. It is preferred that the elastic material 11 completely covers the area between the edges 12, alternatively may the area between the edges 12 only partly be covered with an elastic element 11, for instance by elastic ribbons between the edges.

According to an alternative embodiment of the present invention, the pleat 10 could be arranged forming an angle towards the lower edge of the rug. The pleat is also not limited to start at the neck edge on the rug but can begin on a distance below the neck edge.

The gusset/pleat design according to the present invention does not need to be designed as a shoulder gusset/ pleat but may of course be placed on other locations along the rug, such as in connection to for example the withers or the rear portion of the horse.

The invention is neither limited for usage to horses, but do also comprise rugs and similar garments for other animals.

The invention shall not be considered to be limited to the above mentioned embodiments, everything being into the scope of the enclosed claims is considered to constitute the present invention.

## Claims

1. A rug for animals having four legs, especially horses, which rug is provided with a gusset possibly forming a pleat (10),
**characterised in,**
**that** an elastic element (11) is arranged in connection to said gusset/pleat (10), wherein said elastic element (11) allowing that the edges (12) of the gusset/pleat, essentially extending in the same direction as the gusset/pleat (10), are brought together by means of the non-locking force in the elastic element (11), and in that the elastic element allows the gusset/pleat (10) to be expanded.

2. Rug according to claim 1,
**characterised in,**
**that** said elastic element (11) completely covers the area between the edges (12).

3. Rug according to claim 1,
**characterised in,**
**that** said elastic element (11) only partly covers the area between the edges (12).

4. Rug according to the claims 1 - 3,
**characterised in,**
**that** said gusset/pleat (10) essentially is vertically arranged.

5. Rug according to the claims 1 - 3,
**characterised in,**
**that** said gusset/pleat (10) is arranged at an angle to the lower edge (15) on the rug.

6. Rug according to the claims 1 - 5,
**characterised in,**
**that** said gusset/pleat (10) extends to the lower edge (15) of said rug.

7. Rug according to the claims 1 - 6,
**characterised in,**
**that** the material forming the rug contains an elastic material (11) in the area for the gusset/pleat (10).

8. Rug according to the claims 1 - 7,
**characterised in,**
**that** the gusset/pleat (10) is arranged in that part of the rug lying over the shoulder portion of the horse.

## Patentansprüche

1. Decke für Vierbeiner, insbesondere für Pferde, wobei die Decke einen keilförmigen Einsatz gegebenenfalls in Form einer Falte (10) aufweist,
**dadurch gekennzeichnet,**
**dass** ein elastisches Element (11) in Verbindung mit diesem keilförmigen Einsatz/dieser Falte (10) angeordnet ist, wobei es das elastische Element (11) ermöglicht, dass die Kanten (12) des keilförmigen Einsatzes/der Falte, die sich im wesentlichen in der gleichen Richtung wie der keilförmige Einsatz/die Falte erstrecken, durch die nicht schließende Kraft im elastischen Element (11) zusammengebracht werden und dass das elastische Element die Erweiterung des keilförmigen Einsatzes/der Falte gestattet.

2. Decke nach Anspruch 1,
**dadurch gekennzeichnet,**
**dass** das elastische Element (11) den Bereich zwischen den Kanten (12) vollständig abdeckt.

3. Decke nach Anspruch 1,
**dadurch gekennzeichnet,**
**dass** das elastische Element (11) den Bereich zwischen den Kanten (12) nur teilweise abdeckt.

4. Decke nach Anspruch 1 bis 3,
**dadurch gekennzeichnet,**
**dass** der keilförmige Einsatz/die Falte (10) im wesentlichen vertikal angeordnet ist.

5. Decke nach Anspruch 1 bis 3,
**dadurch gekennzeichnet,**
**dass** der keilförmige Einsatz/die Falte (10) in einem Winkel zur unteren Kante (15) auf der Decke angeordnet ist.

6. Decke nach Anspruch 1 bis 5,
**dadurch gekennzeichnet,**
**dass** sich der keilförmige Einsatz/die Falte (10) zur unteren Kante (15) der Decke erstreckt.

7. Decke nach Anspruch 1 bis 6,
**dadurch gekennzeichnet,**
**dass** das Material, aus welchem die Decke besteht, im Bereich für den keilförmigen Einsatz/die Falte (10) ein elastisches Material (11) enthält.

8. Decke nach Anspruch 1 bis 7,
**dadurch gekennzeichnet,**
**dass** der keilförmige Einsatz/die Falte (10) in dem Teil der Decke angeordnet ist, die über dem Schulterbereich des Pferdes liegt.

## Revendications

1. Couverture pour animaux ayant quatre pattes, en particulier des chevaux, laquelle couverture est munie d'un soufflet éventuellement ayant la forme d'un pli (10),
**caractérisée en ce qu'**un élément élastique (11) est agencé en connexion avec ledit soufflet/pli (10), ledit élément élastique (11) permettant que les bords (12) du soufflet/pli, s'étendant essentiellement dans la même direction que le soufflet/pli (10), soient amenés ensemble par l'intermédiaire d'une force non-bloquante de l'élément élastique (11), et **en ce que** l'élément élastique permet au soufflet/pli (10) d'être élargi.

2. Couverture selon la revendication 1,
**caractérisée en ce que** ledit élément élastique (11) recouvre complètement la zone située entre les bords (12).

3. Couverture selon la revendication 1,
**caractérisée en ce que** ledit élément élastique (11) recouvre seulement partiellement la zone située entre les bords (12).

4. Couverture selon l'une quelconque des revendications 1 à 3,
**caractérisée en ce que** ledit soufflet/pli (10) est essentiellement agencé verticalement.

5. Couverture selon l'une quelconque des revendications 1 à 3,
**caractérisée en ce que** ledit soufflet/pli (10) est agencé sur un angle par rapport au bord inférieur (15) de la couverture.

6. Couverture selon l'une quelconque des revendications 1 à 5,
**caractérisée en ce que** ledit soufflet/pli (10) s'étend jusqu'au bord inférieur (15) de ladite couverture.

7. Couverture selon l'une quelconque des revendications 1 à 6,
**caractérisée en ce que** le matériau formant la couverture contient un matériau élastique (11) dans la zone destinée au soufflet/pli (10).

8. Couverture selon l'une quelconque des revendications 1 à 7,
**caractérisée en ce que** le soufflet/pli (10) est agencé dans cette partie de la couverture s'étendant sur la partie d'épaule du cheval.
